# EUROPEAN PATENT APPLICATION

(11) **EP 0 940 656 A1**
(43) Date of publication of application: **08.09.1999**
(21) Application number: 99610014.5
(22) Date of filing: 26.02.1999
(51) Int. Cl.: G01F 1/66, A01D 41/12

(54) **A method for determining the mass flow rate of a granular material**

(30) Priority: 06.03.1998 DK 30498
(71) Applicant: Dronningborg Industries A/S, 8900 Randers (DK)
(72) Inventor: Fabrin, Knud, 4450 Jyderup (DK); Langkjer, Carsten, 2730 Herlev (DK)
(74) Representative: Siiger, Joergen

(57) **Abstract**

A method of determining the mass flow rate of a granular material through a channel 1 by means of electromagnetic microwaves where the attenuation and/or the phase-displacement is/are measured by means of a transmitter/receiver equipment 2, 3 at the channel 1. Most of the undesired signals in the measuring equipment are characterised by the phase versus the time varying in both positive and negative direction unlike a phase variation caused by grains in the measuring length, the latter phase variation only involving a phase-displacement in one direction. The undesired signal presents an average phase-displacement of zero and can therefore be deducted in order to obtain an improved measuring accuracy.

## Description

The invention relates to a method of determining the mass flow rate of a granular material through a channel by means of electromagnetic microwaves where the attenuation and/or the phase-displacement is/are measured by means of a transmitter/receiver equipment at the channel.

US-PS No. 4,628,830 discloses a way of continuously determining the mass flow rate of a granular material by means of microwaves, where the determination is based only on the absorption of the wave energy caused by the water content in a powdered coal material fed to a burner in a power plant. The measuring is performed on a falling flow of the material in a pipe where a microwave generator is placed opposite a receiver. In this manner it is possible to measure the volume of the energy absorption in the material, or rather it is possible to obtain an expression of the variations applying to the mass flow. The latter is possible as long as the material in question is a specific more or less homogeneous material. In connection with combine harvesters it is furthermore required that the measuring device can operate on various materials which in no way are homogeneous.

The known measuring devices are furthermore encumbered with the draw-back that they are not sufficiently accurate due to undesired reflections in the channel. The latter can be partially remedied by coating the inner sides of the channel with a microwave-absorbing material, cf. PCT/DK96/00226.

The object of the invention is therefore to provide a method of determining the mass flow rate of a granular material, said method being far more accurate than hitherto known.

A method of the above type is according to the invention characterised by carrying out a compensation for signals deriving from undesired reflections and reflections from the walls of the channel and from components inside said channel during the measuring of the phase-displacement, and not for signals deriving from the material to be transported through the channel, whereby the method for the compensation for undesired reflections utilizes the fact that the portions of the channel and the components inside said channel vibrate and thereby modulate said undesired reflected signals in a characteristic manner in such a way that said signals deriving from said undesired reflections can be filtered off. As a result the vibration of the walls of the channel is utilized, said vibration causing a modulation of the undesired reflected signals in a characteristic manner. These signals can be localized and filtered off in such a manner that they do not influence the measuring result per se.

According to a particularly advantageous embodiment, the undesired reflected signals are filtered off by a measuring of only the DC component of the phase-displacement, whereby it is utilized that the phase of the undesired reflected signals from the portions of the channel and the components inside said channel is modulated in such a manner that the average phase-displacement is zero.

For the determination of the phase-displacement it is advantageous to use a carrier wave signal of a relatively high frequency, such as 22 GHz, said carrier wave signal being modulated by means of a signal of a comparatively lower frequency, such as 5 GHz.

The two side bands can furthermore be used for determination of the moisture content, as it is possible to measure the attenuation at both side bands and to utilize that said attenuation is more moisture-dependent at one side band than at the other side band. In this manner it is furthermore possible to take into account the moisture content and accordingly it is possible to obtain an improved measurement.

Moreover, a sensor may be arranged adjacent the measuring length or directly facing said measuring length, said sensor for instance being in form of an infrared spectrometer for determination of the temperature of the passing granular material. As a result it is furthermore possible to compensate for the temperature and thereby to obtain an improved measurement.

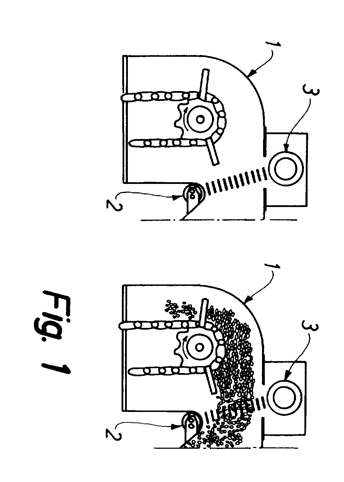

The invention is explained in greater detail below with reference to the accompanying drawing, in which
Figure 1 illustrates an elevator for the transport of granular materials, such as grains, said elevator comprising a transmitter and a receiver for detecting the flow of said granular materials,
Figure 2 illustrates the detailed structure of the transmitter shown in Figure 1,
Figure 3 illustrates the detailed structure of the receiver shown in Figure 1,

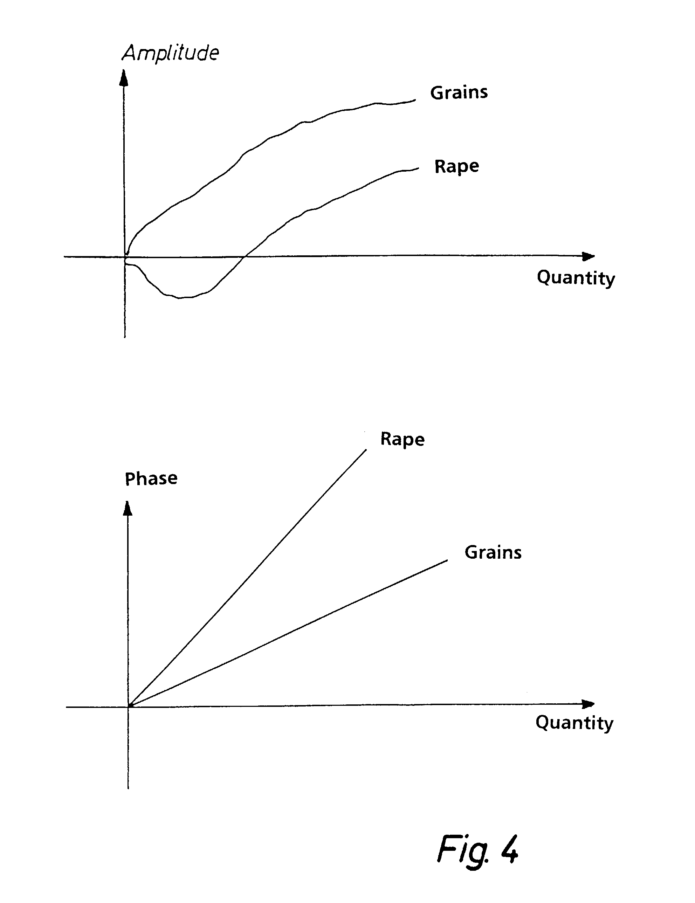

Figure 4 illustrates the amplitude and the phase-displacement, respectively, of the microwave signal transmitted from the transmitter to the receiver versus the passing quantity of grains and rape, respectively, and

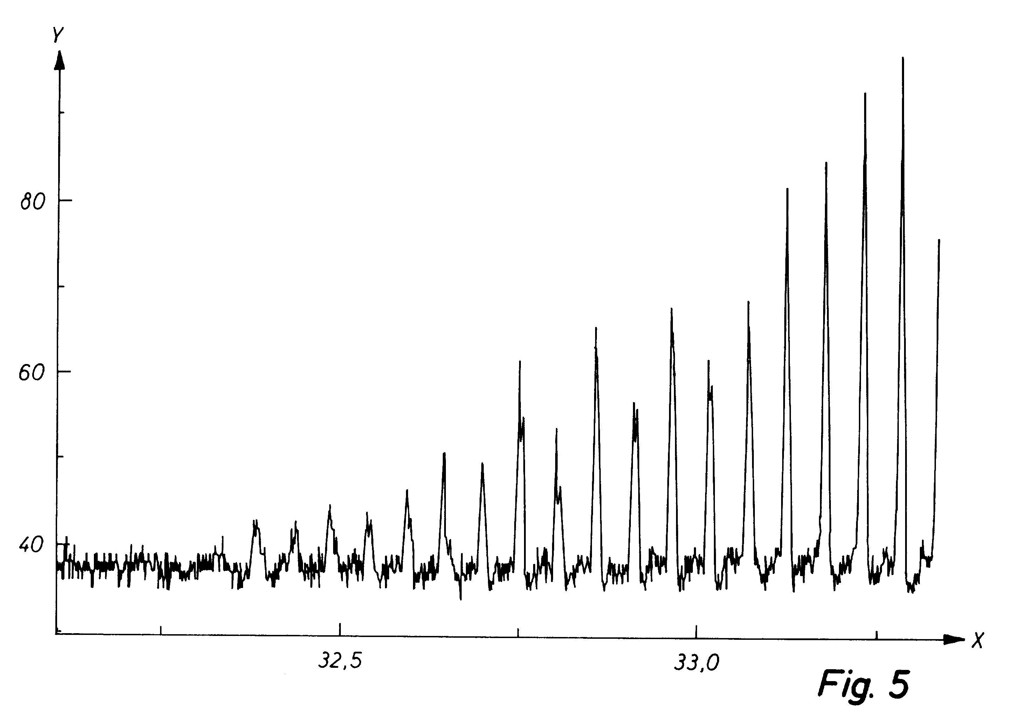

Figure 5 illustrates the phase-displacement of the transmitted signal versus the quantity passing in the grain elevator.

When a microwave foldmeter is used in connection with an empty grain elevator 1, a variation is registered in the amplitude of a microwave signal which is transmitted from a transmitter 2 arranged at the grain elevator to a receiver 3 arranged at the opposite side of said grain elevator 1. This variation can erroneously be interpreted as if the grain elevator 1 is carrying a small portion of grains. However, this amplitude variation does not originate from an attenuation caused by grains, but from alternately constructive and destructive interference. The variation arises when the signal transmitted by the transmitter 2 and a scattered portion thereof is summed up at the receiver aerial 3 through multiple reflections including inter alia a variable reflection from plates in the grain elevator 1.

This type of variation in the detected amplitude signal is characterised by the phase alternately varying in positive and negative direction unlike an amplitude variation caused by grains in the measuring length inside the grain elevator 1 as the latter variation is accompanied by nothing but a phase-displacement in one direction. Thus the desired signal presents a DC component unlike the undesired signal which is a pure AC variation.

A continuous observation of both the amplitude variations and phase-displacements renders it therefore possible to suppress the undesired signals and accordingly to expand the measuring area downwardly, which in turn ensures a very high measuring accuracy. The derivation of the desired signals can in practice be carried out by a measuring of the AC component of the signal at insignificant amplitude variations followed by an adjustment of the measuring signal in accordance therewith.

It turned out that the microwave absorption in the passing grains depends highly on the temperature, and therefore it is necessary to adjust the measured values so as to achieve the desired measuring accuracy. The temperature in the grain flow must be known in detail (within 1°C) in order to obtain an optimum calculation thereof. A thermometer inserted in the grain flow at the mass measuring device is, however, subjected to much wear, and accordingly it must be arranged in a less exposed position. As a result, the temperature measurement is, however, subjected to a time-delay relative to the microwave measurement. The temperature changes are registered continuously, and when the velocity of the grain elevator 1 is known, the grain flow can be calculated with the correct correction of the temperature.

The phase-measuring circuit is due to its simple structure unable to provide information on phase-displacements exceeding 360°. In order to obtain further information, a modulation signal has been applied to the main signal. When the main signal (22.075 GHz) is modulated with a signal of a lower frequency (such as 2.76 GHz), the phase-displacement of the resulting signal includes information on both frequencies. As a result, the low-frequency portion of the signal can provide information on the number of periods, if any, which must be added to the information provided by the high-frequency signal. In this manner the phase-measuring circuit can be utilized for crops with a relatively unreliable amplitude variation, for instance for very fatty crops, such as rape. This method is remarkable for not necessitating a transmission of the low frequency in order to derive the information.

However, it is necessary to transmit and detect energy in both frequency areas in question in order to utilize the fact that grains present a differing attenuation versus the moisture content at various frequencies. A high frequency, such as 22 GHz is used in combination with a low frequency of for instance 5 GHz.

The determination of the moisture content is carried out by comparing the attenuation in the two side bands with table references containing previously measured data of the grain types in question, optionally by way of software.

The measuring of the mass flow rate by means of electromagnetic microwaves necessitates a compensation for the moisture content of the mass in order to obtain an accurate determination of the mass. It is also necessary to compensate for the temperature of the mass in order to obtain an accurate determination of the mass.

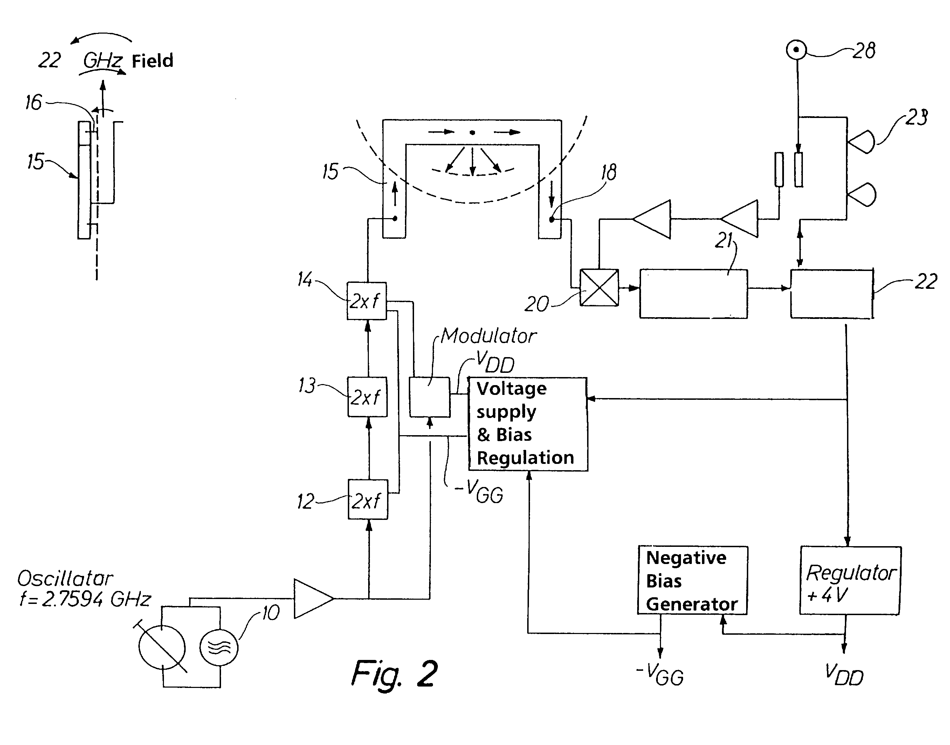

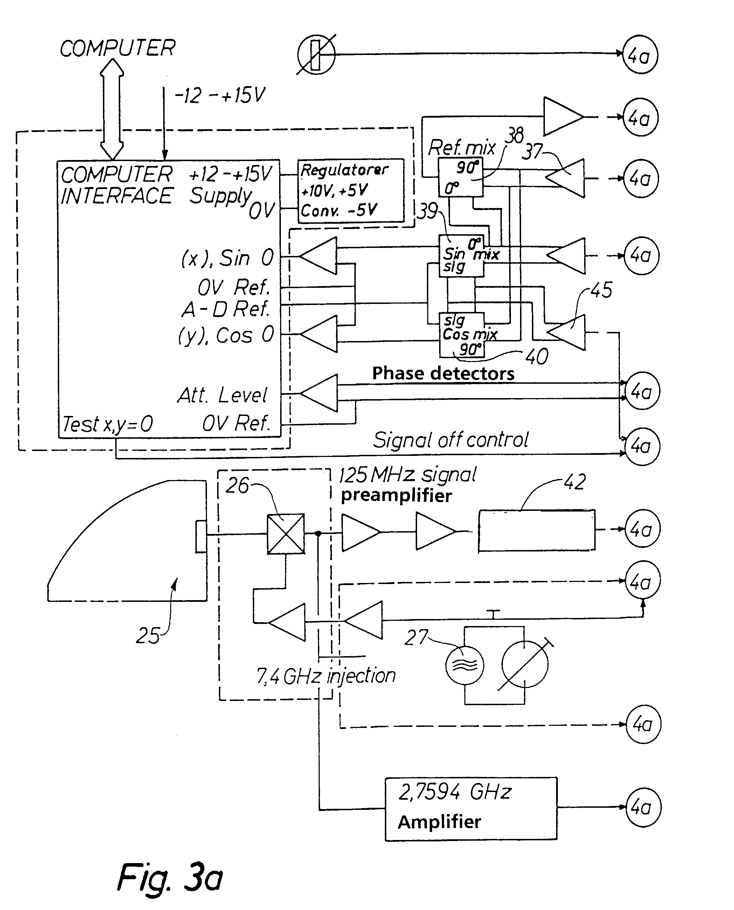

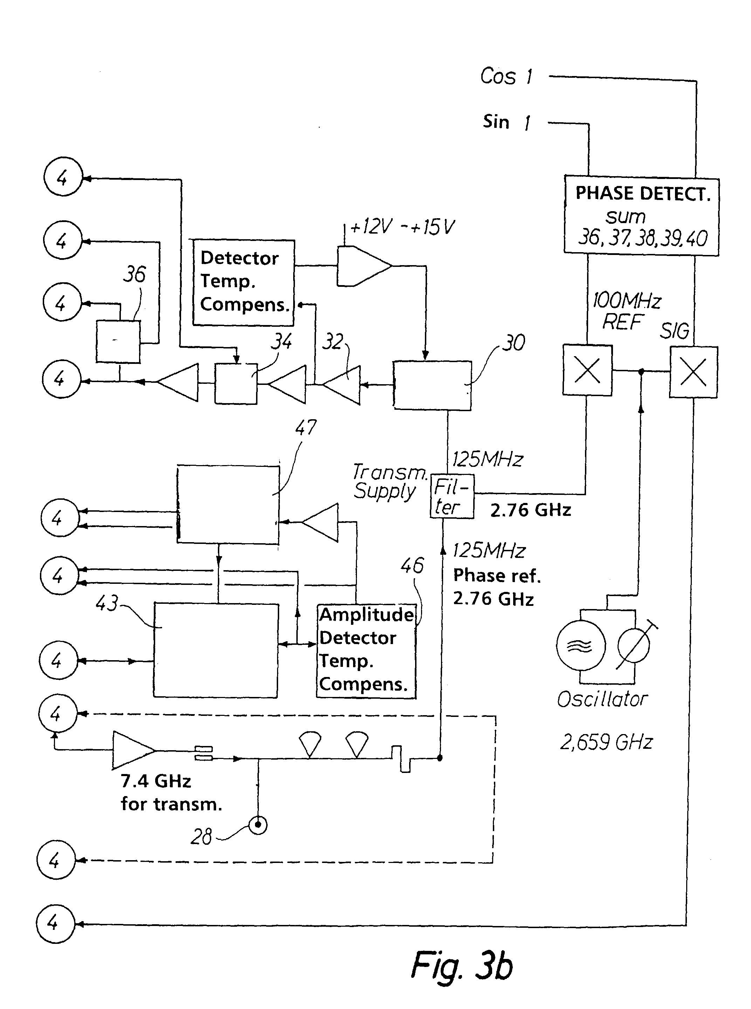

A particularly advantageous embodiment of a transmitter/receiver equipment 2, 3 for measuring oil-containing grains, such as rape, appears from Figures 2 and 3. Oil-containing grains are able to act on the dielectricity constant and thereby the phase of the transmitted signal in such a manner that the phase-displacement is substantially proportional to the flow of oil-containing grains. However, the attenuation is not subjected to an effect in an unambiguous manner, and it cannot therefore be used for flow measurements.

Like previously, cf. Figure 3 of PCT/DK96/00226, the flow measuring is performed by means of a high-frequency electromagnetic radiation, in this case at a frequency of 22 GHz. A generator 10 transmits a signal of 2.7594 GHz through an amplifier 11 and two frequency doublers 12, 13 and an additional frequency doubler 14. The eight-frequency-doubled signal of 22.075 GHz is transmitted to one end of a U-shaped waveguide 15 through a rod-shaped aerial inserted in said waveguide 15. A small whip aerial 16 is accommodated in the centre of the U-shaped waveguide 15. The whip aerial 16 is preferably of a length corresponding to a quarter of a wavelength. At the opposite end of the waveguide 15 a further rod-shaped aerial 18 is provided, said rod-shaped aerial serving as a reference aerial. This aerial 18 receives a signal partly being mixed (at a mixing step 20) with an injection signal of 7.4 GHz from the receiver and used as a reference signal in said receiver and partly being used for running a driver and one of the frequency doublers 14 (through a filter and adapting unit 21 and a DC/HF splitter 22). The mixing in the mixing step 20 uses the third harmonic of the injection signal of 7.4 GHz. The mixing step 20 results in a signal of 125 MHz (22.2 to 22.075). This signal is transmitted through the filter and adapting unit 21 to the DC/HF splitter 22. Subsequently, the 125 MHz signal is returned through a filter 23 to the receiver. The signal transfer to the receiver is performed through a semi-stiff cable 28. The 7.4 GHz signal from the receiver is also transferred through this cable 28. Furthermore, a DC voltage is transferred from the receiver for operating the transmitter. The DC voltage is fed to a voltage regulator generating the necessary supply voltages.

A diagram of the receiver is illustrated in Figure 3. The signal transmitted by the aerial 16 of 22.075 GHz is received at a slot aerial 25. The signal received is mixed in a mixing step 26 with the above injection signal of 7.4 GHz (from a generator 27) after a suitable amplification. The signal of 7.4 GHz is, as previously mentioned, also transmitted to the transmitter through the semi-stiff cable 28. The DC voltage for operating the transmitter is also transmitted through the semi-stiff cable 28. The supply of the DC voltage is performed through a filter. The above reference signal of 125 MHz is also received from the semi-stiff cable 28. This signal is transmitted to a DC/HF splitter 30 and subsequently to an amplifier 32 and a variable delay 34 (including a varactor diode) for setting the initial phase setting. The variable delay 34 is set in a specific position. From the variable delay 34 the signal is transmitted to an amplifier and subsequently split into three parts. The first and the second part is transmitted through a further variable delay 36. Now the signal is transmitted through an amplifier 37 to a phase detector 38 (REFMIX). One of the output signals from the phase detector 38 is returned through a feedback loop to the variable delay 36, which consequently automatically moves towards equilibrium. Moreover, the signal from the amplifier 37 is transmitted to a phase detector 40 (COSMIX). The signal from the variable delay 34 is furthermore transmitted directly to a third phase detector 39 (SINMIX).

Now the main signal is discussed. The signal from the mixing step 26 is a signal of 125 MHz, which, however, deviates from the previously mentioned reference signal of 125 MHz. The deviations mean that the main signal includes information on the material passed by the signal of 22 GHz. The main signal is transmitted through a filter 42 to a variable attenuator and amplifier 43. The latter amplifier includes a PIN diode, which in connection with an amplitude circuit implies that the output signal has a constant amplitude allowing phase comparisons. This output signal is transmitted through an amplifier 45 to SINMIX 39 and COSMIX 40, respectively, and is compared with the reference signal of 125 MHz, whereby a phase is obtained both with respect to the cosinus and the sinus function.

The amplitude circuit comprises an amplitude detector 46 rectifying the signal from the variable attenuator 43. The signal from the amplitude detector 46 is transmitted to a linear logarithmic converter 47, the output signal of which is used as reference level in the variable attenuator 43, which in turn ensures that the output signal receives a constant amplitude. This output signal is then the mass flow signal, which by a phase comparison with the reference signal provides both the phase-displacement caused by the mass flow and consequently the mass flow.

The circuit shown in Figure 2 is according to the invention modified in such a manner that it is possible to compensate for signals deriving from undesired reflections and reflections from the walls of the channel 1 and from components in said channel not deriving from the material to be transported, whereby the fact is utilized that the portions of the channel and the components in said channel vibrate and thereby modulate said undesired reflected signals in a characteristic manner.

The frequency of the signal from the oscillator 10 is transmitted to a modulator, which transmits a modulation signal to the frequency doubler 14 so as to modulate the supply voltage to the frequency doubler 14. The output signal of 22.075 GHz of the frequency doubler 14 is thereby AM-modulated with a signal of 2.76 GHz. This AM-modulated signal is transmitted at the waveguide 15 and irradiated by the parabolic reflector. A portion of this signal is, however, collected at the opposite end 18 of the waveguide 15, which transmits said portion of the signal to an associated mixing step 20. The mixing step 20 is furthermore provided with a reference signal from the semi-stiff cable 28. From 28, 2.76 GHz and the reference signal of 125 MHz are transmitted.

Figures 3a and 3b illustrate the receiver. A signal transmitted to the mixing step 26 is received at the receiver aerial 25. The signal received includes 22.075 GHz modulated with 2.76 GHz. It is mixed with the signal from the local oscillator 27. The mixing product includes inter alia 125 MHz which is the amplitude of the 22.075 GHz and some 2.76 GHz deriving from the amplitude of the modulation. They are amplified by their respective preamplifiers. The 125 MHz signal is processed in the same manner as previously, cf. PCT/DK96/00226. The 2.76 GHz signal is processed in a similar manner by insertion of an oscillator of 2.66 GHz. It is used for separating the reference signals into 125 MHz, like previously, and 2.76 GHz. The new 2.76 GHz signal is mixed down to the same frequency into two 100 MHz signals, which present a phase-displacement in response to the phase-displacement between the signal received at the receiver aerial 25 and the reference signal. The phase detectors are formed as previously stated and provide SIN1 and COS1.

Every wavelength delay on SIN1 and COS1 involves a delay of 8 wavelengths on SIN0, COS0, which corresponds to the ratio of the wavelengths of the signals of 2.76 GHz and 22.075 GHz, respectively.

The analogous data of the microwave unit concerning attenuation and phase angle are transferred to a microcontroller calculating the mass in the measuring chamber. When these data are transferred to the job computer in the combine harvester in question and compared with the elevator velocity, efficient cutting table width and drive, the yield per area unit can be calculated.

In order to allow a calculation of the mass in the measuring chamber, it is also necessary to know the material properties. The latter is obtained by the driver selecting the type of grain in a menu on the computer of the combine harvester before the harvesting is initiated. In this manner it is possible to transfer data concerning temperature coefficients and attentuation/phase characteristics to the microcontroller. Once the temperature and the attenuation have been measured, the microcontroller can transfer adjusted mass data by way of a combination of table references and calculations, said mass data being integrated in the job computer.

## Claims

1. A method of determining the mass flow rate of a granular material through a channel (1) by means of electromagnetic microwaves where the attenuation and/or the phase-displacement is/are measured by means of a transmitter/receiver equipment (2, 3) at the channel, characterised by carrying out a compensation for signals deriving from undesired reflections and reflections from the walls of the channel (1) and from components inside said channel (1) during the measuring of the phase-displacement, and not for signals deriving from the material to be transported through the channel (1), whereby the method for the compensation for undesired reflections utilizes the fact that the portions of the channel (1) and the components inside said channel (1) vibrate and thereby modulate said undesired reflected signals in a characteristic manner in such a way that said signals deriving from said undesired reflections can be filtered off.

2. A method as claimed in claim 1, characterised in that the undesired reflected signals are filtered off by a measuring of only the DC component of the phase-displacement, whereby it is utilized that the phase of the undesired reflected signals from the portions of the channel (1) and the components inside said channel (1) is modulated in such a manner that the average phase-displacement is zero.

3. A method as claimed in claim 1, characterised by using a carrier wave signal of a relatively high frequency, such as 22.075 GHz, for the determination of the phase-displacement, said carrier wave signal being modulated by means of a signal of a comparatively lower frequency, such as 2.76 GHz.

4. A method as claimed in claim 3, characterised by measuring the attenuation at both side bands for the determination of the moisture content.

5. A method as claimed in claim 3 or 4, characterised in that a sensor is arranged adjacent the measuring length or directly facing said measuring length, said sensor for instance being in form of an infrared spectrometer for determination of the temperature of the passing granular material.
